# FASCICULE DE BREVET EUROPEEN

(11) **EP 3 750 377 B1**
(45) Date de publication et mention de la délivrance du brevet: **03.08.2022**
(21) Numéro de dépôt: 19704364.9
(22) Date de dépôt: 21.01.2019
(51) Int. Cl.: H05B 1/02, B60H 1/22, H02J 1/14

(54) **PROCÉDÉ DE CONTRÔLE DE L'ALIMENTATION DE MOYENS DE CHAUFFAGE ÉLECTRIQUE D'UN SYSTÈME, EN FONCTION DE LA PUISSANCE ÉLECTRIQUE DISPONIBLE ET DES BESOINS**
VERFAHREN ZUR STEUERUNG DER LEISTUNGSVERSORGUNG VON ELEKTRISCHEN HEIZMITTELN EINES SYSTEMS IN ABHÄNGIGKEIT VON DER VERFÜGBAREN ELEKTRISCHEN LEISTUNG UND DEM BEDARF
METHOD FOR CONTROLLING THE POWER SUPPLY OF ELECTRIC HEATING MEANS OF A SYSTEM, AS A FUNCTION OF THE AVAILABLE ELECTRIC POWER AND NEEDS

(30) Priorité: 08.02.2018 FR 1851081
(43) Date de publication de la demande: 16.12.2020
(73) Titulaire: PSA Automobiles SA, 78300 Poissy (FR)
(72) Inventeur: COMTE, Raphael, 27650 MESNIL SUR L ESTREE (FR); TREMISOT, Francois, 91530 LE VAL ST GERMAIN (FR); PERSEVAL, Herve, 91310 MONTLHERY (FR); MASSE, Christophe, 78390 BOIS D ARCY (FR)
(86) Numéro de dépôt international: PCT/FR2019/050120
(87) Numéro de publication internationale: WO 2019/155136

(56) Documents cités:
- DE-A1-102008 056 757
- US-A1- 2005 061 798
- US-A1- 2013 146 587
- US-A1- 2016 046 174

## Description

L'invention concerne les systèmes qui comprennent plusieurs moyens de chauffage électrique, et plus précisément le contrôle de l'alimentation électrique de ces moyens de chauffage électrique.

De nombreux systèmes comprennent au moins un producteur d'énergie électrique couplé en parallèle à un réseau de consommation électrique et à au moins deux moyens de chauffage électrique, comme par exemple des résistances chauffantes (éventuellement de type CTP (« Coefficient de Température Positif »)), ainsi qu'éventuellement à au moins un stockeur d'énergie électrique. C'est notamment le cas, par exemple, de certains véhicules (éventuellement automobiles).

US 2005/061798 A1 divulgue un procédé selon le préambule de la revendication 1.

L'utilisation de plusieurs moyens de chauffage électrique (éventuellement de puissances différentes) est généralement destinée à permettre un chauffage en plusieurs endroits, par exemple d'un habitacle de véhicule, et/ou une modulation importante de la puissance de chauffage.

Comme le sait l'homme de l'art, la plupart des moyens de chauffage électrique actuels sont contrôlés par des interrupteurs selon un mode de type tout ou rien (ou « on/off »). Par conséquent, chacun d'entre eux peut être soit en fonctionnement (on), soit non utilisé (off). Lorsque le(s) producteur(s) d'énergie électrique actif(s) ou un éventuel stockeur d'énergie électrique ne peu(ven)t pas fournir suffisamment de puissance électrique pour alimenter simultanément le réseau de consommation électrique et certains au moins des moyens de chauffage électrique, on est alors contraint de changer l'état des interrupteurs afin d'alterner des phases d'alimentation électrique et des phases de non alimentation électrique des moyens de chauffage électrique concernés. Or, cela induit ce que l'homme de l'art appelle parfois des « bagottements », c'est-à-dire des délais d'activation et de désactivation de type hystérésis qui provoquent dans le réseau de consommation électrique une instabilité se traduisant par des ondulations et perturbations. On notera que l'on parle ici de « puissance électrique » et non d'énergie électrique car le besoin est instantané.

Il arrive donc fréquemment que l'on ne puisse pas fournir la puissance électrique maximale disponible aux moyens de chauffage électrique concernés, ce qui dégrade la qualité du chauffage ou contraint à utiliser des producteurs d'énergie électrique en plus grand nombre et/ou plus puissants et donc augmente les coûts, le poids et l'encombrement.

Il est certes possible, comme cela est notamment décrit dans le document brevet FR 3007229, de commander les interrupteurs des moyens de chauffage électrique à partir d'une unique commande de type PWM (« Pulse Width Modulation » - « à modulation de largeur d'impulsion »), reçue sur un unique fil électrique de commande. Mais cette solution ne permet pas de contrôler les interrupteurs en fonction de ce que peut fournir le producteur d'énergie électrique actif ou l'éventuel stockeur d'énergie électrique à l'instant considéré. En outre, cela ne permet pas de prendre en compte l'état du stockeur d'énergie électrique et l'état du réseau de consommation électrique.

L'invention a donc notamment pour but d'améliorer la situation.

Elle propose à cet effet un procédé de contrôle de l'alimentation électrique pour un système comprenant au moins un producteur d'énergie électrique couplé en parallèle à un réseau de consommation électrique et à au moins deux moyens de chauffage électrique ayant des puissances (différentes ou égales).

Ce procédé de contrôle comprend une étape dans laquelle on génère pour des moyens d'interruption, en nombre égal au nombre de moyens de chauffage électrique, installés entre chaque producteur d'énergie électrique et l'un des moyens de chauffage électrique et pouvant être placés selon une commande dans un premier état empêchant totalement l'alimentation en puissance électrique du moyen de chauffage électrique associé ou un second état alimentant le moyen de chauffage électrique associé avec une puissance électrique égale à 100% d'une puissance maximale prédéfinie, des commandes en fonction d' une puissance électrique maximale pouvant être fournie et de première et seconde valeurs, la première valeur définissant des besoins de puissance électrique pour le réseau de consommation électrique et la seconde valeur définissant des besoins de puissance électrique pour lesdits moyens de chauffage électrique.

Une commande imposant le premier état est générée pour un moyen d'interruption associé au moyen de chauffage électrique ayant une priorité minimale parmi des priorités attribuées aux moyens de chauffage électrique qui doivent être utilisés lorsqu'une somme des première et seconde valeurs est strictement supérieure à la puissance électrique maximale. Dans ladite étape on génère une commande dite à modulation de largeur d'impulsion imposant une alternance choisie entre lesdits premier et second états pour le moyen d'interruption associé au moyen de chauffage électrique ayant une priorité minimale parmi des priorités attribuées aux moyens de chauffage électrique devant être utilisés, et une commande imposant ledit second état pour chaque moyen d'interruption associé à un moyen de chauffage électrique ayant une priorité supérieure à cette priorité minimale, lorsque ladite somme des première et seconde valeurs est inférieure ou égale à ladite puissance électrique maximale.

Grâce à l'invention, on peut maximiser la puissance électrique qui est fournie par un producteur d'énergie électrique, alors même qu'elle est maintenue à une valeur inférieure à la puissance électrique maximale que peu(ven)t fournir le(s) producteur(s) d'énergie électrique.

Le procédé de contrôle selon l'invention peut comporter d'autres caractéristiques qui peuvent être prises séparément ou en combinaison, et notamment :
- dans son étape on peut déterminer chaque moyen de chauffage électrique devant être utilisé en fonction d'une puissance maximale autorisée, puis on peut attribuer un classement d'utilisation à chacun de ces moyens de chauffage électrique déterminés, arbitrairement lorsque leurs puissances sont identiques ou en fonction de leur puissances lorsqu'elles sont différentes. Puis, on peut déterminer un producteur d'énergie électrique pouvant fournir la puissance électrique maximale, puis on peut déterminer une commande pour chacun des moyens de chauffage électrique déterminés en fonction de son classement d'utilisation ;
   ➢ dans son étape, en présence d'au moins un stockeur d'énergie électrique couplé en parallèle à chaque producteur d'énergie électrique et au réseau de consommation électrique, et lorsqu'aucun producteur d'énergie électrique ne peut fournir la puissance électrique maximale, on peut utiliser le stockeur d'énergie électrique pour alimenter en puissance électrique les moyens de chauffage électrique déterminés ;
   ➢ dans son étape on peut générer simultanément les commandes des moyens de chauffage électrique déterminés en fonction de leurs classements d'utilisation respectifs ;
   ➢ en variante, dans son étape on peut générer les commandes des moyens de chauffage électrique déterminés les unes après les autres en commençant par celle du moyen de chauffage électrique ayant le classement d'utilisation le plus prioritaire ;
- dans son étape on peut générer les commandes des moyens de chauffage électrique déterminés en fonction également d'une tension aux bornes du réseau de consommation électrique ;
   ➢ dans son étape, lorsqu'un producteur d'énergie électrique peut fournir la puissance électrique maximale, on peut générer soit une commande fonction de la somme des première et seconde valeurs lorsque cette somme est strictement supérieure à la puissance électrique maximale et la tension aux bornes du réseau de consommation électrique est supérieure à un premier seuil, aberrante (ou trop élevée) ou inférieure à un second seuil inférieur au premier seuil, ou bien lorsque cette somme est inférieure ou égale à la puissance électrique maximale et la tension aux bornes du réseau de consommation électrique est aberrante ou inférieure au second seuil, soit une commande fonction de la somme des première et seconde valeurs et de la tension aux bornes du réseau de consommation électrique lorsque cette somme est strictement supérieure à la puissance électrique maximale et la tension aux bornes du réseau de consommation électrique est comprise entre les premier et second seuils, soit une commande fonction de la tension aux bornes du réseau de consommation électrique lorsque cette somme est inférieure ou égale à la puissance électrique maximale et la tension aux bornes du réseau de consommation électrique est comprise entre les premier et second seuils, soit encore une commande imposant le second état lorsque la somme des première et seconde valeurs est inférieure ou égale à la puissance électrique maximale et la tension aux bornes du réseau de consommation électrique est supérieure au premier seuil ;
   ➢ dans son étape, lorsque seul le stockeur d'énergie électrique peut fournir de la puissance électrique, on peut générer soit une commande fonction d'un état de charge du stockeur d'énergie électrique lorsque cet état de charge est compris entre des états de charge minimum et maximum et la tension aux bornes du réseau de consommation électrique est supérieure à un premier seuil ou aberrante, soit une commande fonction de cet état de charge et de la tension aux bornes du réseau de consommation électrique lorsque cet état de charge est compris entre des états de charge minimum et maximum et la tension aux bornes du réseau de consommation électrique est comprise entre un second seuil, inférieur au premier seuil, et le premier seuil, soit une commande fonction de la tension aux bornes du réseau de consommation électrique lorsque cet état de charge est supérieur à l'état de charge maximum et la tension aux bornes du réseau de consommation électrique est comprise entre les second et premier seuils, soit une commande imposant le second état lorsque cet état de charge est supérieur à l'état de charge maximum et la tension aux bornes du réseau de consommation électrique est supérieure au premier seuil ou aberrante, soit une commande imposant le premier état lorsque cet état de charge est supérieur à l'état de charge maximum et la tension aux bornes du réseau de consommation électrique est inférieure à un troisième seuil, égal au second seuil plus une valeur d'hystérésis, ou bien lorsque cet état de charge est compris entre les états de charge minimum et maximum et la tension aux bornes du réseau de consommation électrique est inférieure au troisième seuil, soit encore une commande imposant le premier état lorsque cet état de charge est strictement inférieur à l'état de charge minimum.

L'invention propose également un dispositif de contrôle pour un système comprenant au moins un producteur d'énergie électrique couplé en parallèle à un réseau de consommation électrique et à au moins deux moyens de chauffage électrique ayant des puissances (différentes ou égales).

Ce dispositif de contrôle comprend
- des moyens d'interruption en nombre égal au nombre de moyens de chauffage électrique, destinés chacun à être installés entre les producteur(s) d'énergie électrique et stockeur(s) d'énergie électrique et l'un des moyens de chauffage électrique et pouvant être placés selon une commande dans un premier état empêchant totalement l'alimentation en puissance électrique du moyen de chauffage électrique associé ou un second état alimentant le moyen de chauffage électrique associé avec une puissance électrique égale à 100% d'une puissance maximale prédéfinie, et
- des moyens de commande générant chacune des commandes en fonction d'une puissance électrique maximale pouvant être fournie et de première et seconde valeurs, la première valeur définissant des besoins de puissance électrique pour le réseau de consommation électrique et la seconde valeur définissant des besoins de puissance électrique pour lesdits moyens de chauffage électrique, les moyens de commande étant configurés pour générer une commande imposant le premier état pour un moyen d'interruption associé au moyen de chauffage électrique ayant une priorité minimale parmi des priorités attribuées aux moyens de chauffage électrique devant être utilisés lorsqu'une somme des première et seconde valeurs est strictement supérieure à la puissance électrique maximale, lesdits moyens de commande étant, en outre, configurés pour générer une commande dite à modulation de largeur d'impulsion imposant une alternance choisie entre lesdits premier et second états pour le moyen d'interruption associé au moyen de chauffage électrique ayant une priorité minimale parmi des priorités attribuées aux moyens de chauffage électrique devant être utilisés, et une commande imposant ledit second état pour chaque moyen d'interruption associé à un moyen de chauffage électrique ayant une priorité supérieure à cette priorité minimale, lorsque ladite somme des première et seconde valeurs est inférieure ou égale à ladite puissance électrique maximale.

L'invention propose également un système comprenant au moins un producteur d'énergie électrique couplé en parallèle à un réseau de consommation électrique et à au moins deux moyens de chauffage électrique ayant des puissances (différentes ou égales), et un dispositif de contrôle du type de celui présenté ci-avant.

Ce système peut comporter d'autres caractéristiques qui peuvent être prises séparément ou en combinaison, et notamment :
- il peut comprendre au moins un stockeur d'énergie électrique couplé en parallèle au réseau de consommation électrique et à chaque producteur d'énergie électrique ;
- il peut constituer un véhicule, éventuellement de type automobile ;
   ➢ chaque producteur d'énergie électrique peut être choisi parmi un alternateur, un alterno-démarreur, un convertisseur de type DC/DC, un convertisseur de type AC/DC, un panneau solaire et une prise de recharge ;
   ➢ il peut comprendre une chaîne de transmission de type tout électrique ou de type hybride ou encore de type thermique.

D'autres caractéristiques et avantages de l'invention apparaîtront à l'examen de la description détaillée ci-après, et des dessins annexés, sur lesquels :

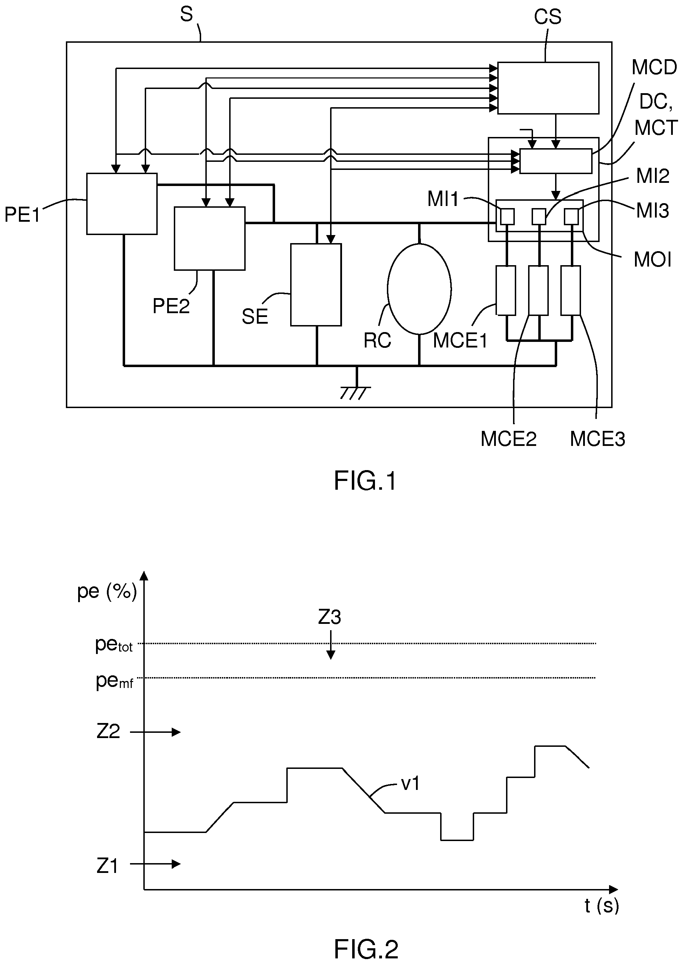

- la figure 1 illustre schématiquement et fonctionnellement un système comprenant des producteurs d'énergie électrique, couplés en parallèle à un stockeur d'énergie électrique, un réseau de consommation électrique et des moyens de chauffage électrique, et un exemple de réalisation d'un dispositif de contrôle selon l'invention,
- la figure 2 illustre schématiquement un exemple de diagramme d'évolution temporelle (t) des puissances électriques totale (petot) et maximale (pemf) que peut fournir un producteur d'énergie électrique d'un système et du besoin en puissance électrique (v1) du réseau de consommation électrique de ce système,

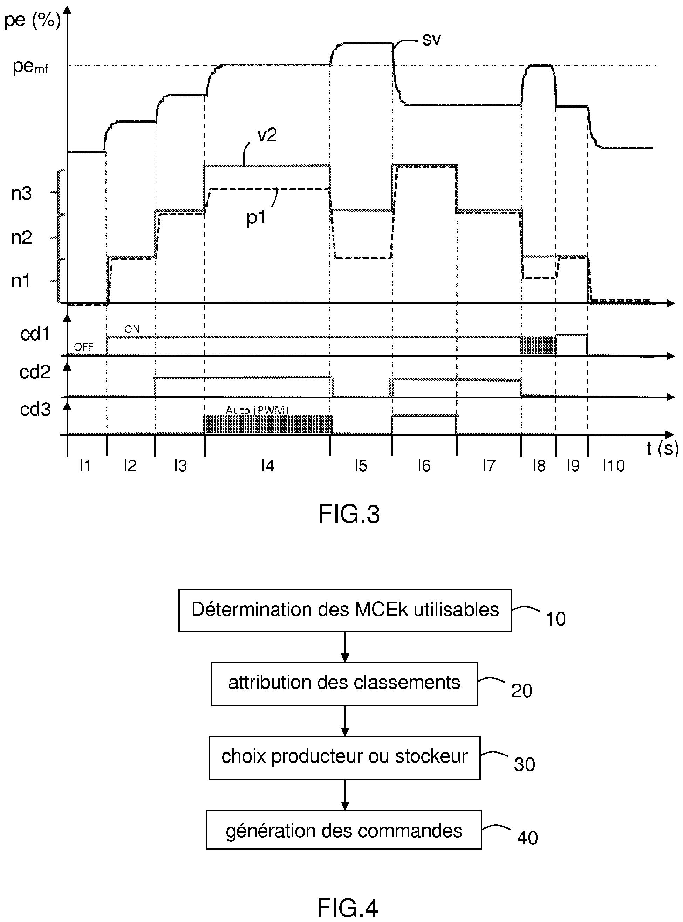

- la figure 3 illustre schématiquement des exemples de diagrammes d'évolution temporelle (t) du besoin total en puissance électrique (sv) du réseau de consommation électrique et des moyens de chauffage électrique déterminés d'un système, du besoin en puissance électrique (v2) des moyens de chauffage électrique déterminés de ce système, de la puissance électrique (p1) effectivement fournie à ces moyens de chauffage électrique déterminés, et des trois commandes (cd1 à cd3) générées respectivement pour les trois moyens d'interruption associées respectivement aux trois moyens de chauffage électrique,
- la figure 4 illustre schématiquement un exemple d'algorithme mettant en œuvre un procédé de contrôle selon l'invention, et

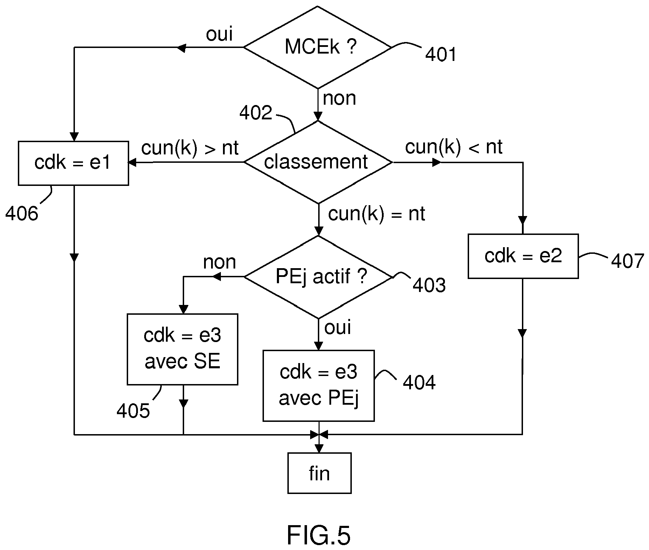

- la figure 5 illustre schématiquement un exemple d'algorithme détaillé d'une partie de la sous-étape 40 de d'algorithme de la figure 4, utilisé pour générer la commande de chaque moyen de chauffage électrique.

L'invention a notamment pour but de proposer un procédé de contrôle, et un dispositif de contrôle DC associé, destinés à permettre le contrôle de l'alimentation électrique d'au moins deux moyens de chauffage électrique MCEk ayant des puissances (différentes ou égales) et équipant un système S comportant en outre au moins un producteur d'énergie électrique PEj couplé en parallèle à un réseau de consommation électrique RC.

Dans ce qui suit, on considère, à titre d'exemple non limitatif, que le système S est un véhicule, éventuellement de type automobile, comme par exemple une voiture. Mais l'invention n'est pas limitée à ce type de système. Elle concerne en effet les véhicules (terrestres, maritimes (ou fluviaux) et aériens), les installations (éventuellement industrielles), et les bâtiments.

Par ailleurs, on considère dans ce qui suit, à titre d'exemple non limitatif, que le véhicule S comprend une chaîne de transmission de type tout électrique ou de type hybride. Mais cela n'est pas obligatoire. En effet, la chaîne de transmission pourrait être de type thermique (c'est-à-dire comprenant au moins un moteur thermique consommant du carburant).

On a schématiquement représenté sur la figure 1 un système (ici un véhicule) S comprenant deux producteurs d'énergie électrique PEj (j = 1 ou 2), couplés en parallèle à un stockeur d'énergie électrique SE, un réseau de consommation électrique RC et trois moyens de chauffage électrique MCEk (k = 1 à 3) ayant des puissances (égales ou différentes), et un exemple de réalisation d'un dispositif de contrôle DC selon l'invention.

Il est important de noter que la mise en œuvre de l'invention ne nécessite pas que le système S comporte au moins un stockeur d'énergie électrique SE. Il pourrait ne pas comporter de stockeur d'énergie électrique ou bien comporter plusieurs (au moins deux) stockeurs d'énergie électrique. De même, la mise en œuvre de l'invention ne nécessite pas que le système S comporte plusieurs producteurs d'énergie électrique PEj. Il faut cependant que le système S comporte au moins un producteur d'énergie électrique PEj. Egalement de même, la mise en œuvre de l'invention ne nécessite pas que le système S comporte trois moyens de chauffage électrique MCEk (ayant des puissances égales ou différentes). Il faut cependant que le système S comporte au moins deux moyens de chauffage électrique MCEk ayant des puissances différentes ou égales.

Selon le système S, et selon ses besoins, le stockeur d'énergie électrique SE peut être de type très basse tension, basse tension, ou haute tension. Ainsi, il peut s'agir d'une batterie de servitude, par exemple ayant une tension comprise entre 12 V et 24 V, ou d'une batterie principale alimentant une machine motrice électrique et par exemple ayant une tension comprise entre 48 V et 600 V.

Le réseau de consommation RC comporte au moins un organe consommateur de puissance électrique. A titre d'exemples non limitatifs, un tel organe peut être un calculateur, un capteur, un combiné d'affichage, des essuie-glaces, une direction assistée électrique, un turbo compresseur électrique, des suspensions électriques, un moteur (ou machine) électrique, ou un système de gestion des arrêts/démarrages d'un moteur.

Les moyens de chauffage électrique MCEk sont par exemple des résistances chauffantes ayant des puissances différentes ou égales, et éventuellement de type CTP (Coefficient de Température Positif).

Lorsque le système S est un véhicule, un producteur d'énergie électrique PEj peut, par exemple, être un alternateur (très basse tension ou basse tension), un alterno-démarreur (très basse tension ou basse tension), un convertisseur de type DC/DC (« Direct Current/Direct Current »), un convertisseur de type AC/DC (« Alternative Current/Direct Current »), un panneau solaire (très basse tension ou basse tension), ou une prise de recharge permettant la recharge d'un stockeur d'énergie électrique SE par connexion à un réseau électrique ou une borne de recharge.

Comme évoqué précédemment, l'invention propose notamment de mettre en œuvre dans le système S un procédé de contrôle destiné à permettre le contrôle de l'alimentation électrique de ses moyens de chauffage électrique MCEk. Un procédé de contrôle, selon l'invention, comprend une étape qui peut être mise en œuvre par le dispositif de contrôle DC qui équipe le système S.

Comme illustré sur la figure 1, un dispositif de contrôle DC, selon l'invention, comprend des moyens d'interruption Mlk et des moyens de commande MCD qui constituent ensemble des moyens de contrôle MCT destinés à être installés entre chaque producteur d'énergie électrique PEj et les moyens de chauffage électrique MCEk.

Les moyens d'interruption Mlk font partie d'un module d'interruption MOI qui est connecté en parallèle aux producteurs d'énergie électrique PEj et au réseau de consommation électrique RC, ainsi qu'à l'éventuel stockeur d'énergie électrique SE. Le nombre de ces moyens d'interruption Mlk est égal au nombre de moyens de chauffage électrique MCEk. Par conséquent, dans l'exemple illustré non limitativement sur la figure 1 le module d'interruption MOI comprend trois moyens d'interruption MI1 à MI3.

Chaque moyen d'interruption Mlk est destiné à être installé entre chaque producteur d'énergie électrique PEj et un moyen de chauffage électrique MCEk associé et à alimenter ce dernier (MCEk) avec une puissance électrique qui est fonction d'une commande cdk générée par les moyens de commande MCD selon les conditions décrites plus loin.

On notera que les moyens de commande MCD peuvent générer des commandes cdk analogiques (au moyen de composants électroniques) ou bien numériques (au moyen, par exemple, d'un microcontrôleur).

Chacun des moyens d'interruption Mlk peut être placé selon une commande cdk dans un premier état e1 discret et non passant afin d'empêcher totalement l'alimentation en puissance électrique du moyen de chauffage électrique MCEk associé ou un second état e2 discret et totalement passant afin d'alimenter le moyen de chauffage électrique MCEk associé avec une puissance électrique égale à 100% d'une puissance maximale prédéfinie pmp.

Cette puissance maximale prédéfinie pmp est, par exemple, égale au rapport entre, d'une part, la différence entre une puissance électrique maximale pe_{mf} (définie plus loin) et la puissance fournie au réseau de consommation électrique RC, et, d'autre part, le nombre de moyens de chauffage électrique MCEk.

Par exemple, chaque moyen d'interruption Mlk peut comprendre des commutateurs électroniques de type MOSFET ou IGBT (« Insulated Gate Bipolar Transistor » - transistor bipolaire à grille isolée).

Dans l'étape du procédé de contrôle selon l'invention on (les moyens de commande MCD) génère(nt) pour les moyens d'interruption Mlk des commandes en fonction de première v1 et seconde v2 valeurs qui définissent des besoins de puissance électrique respectivement pour le réseau de consommation électrique RC et les moyens de chauffage électrique MCEk à l'instant t considéré, et d'une puissance électrique maximale pe_{mf} pouvant être fournie par au moins un producteur d'énergie électrique PEj (ou d'une puissance maximale pouvant être fournie par l'éventuel stockeur d'énergie électrique SE) à l'instant t considéré. Une commande cdk imposant le premier état e1 (non passant) est générée pour le moyen d'interruption Mlk associé au moyen de chauffage électrique MCEk ayant une priorité minimale parmi des priorités attribuées aux moyens de chauffage électrique MCEk devant être utilisés, lorsque la somme sv des première v1 et seconde v2 valeurs est strictement supérieure à la puissance électrique maximale pe_{mf} (soit sv (= v1 + v2) > pemf).

Tout type de priorité peut être envisagé, mais le moyen de chauffage électrique MCEk le plus prioritaire (et donc ayant la priorité maximale) est celui qui est activé en premier. Par exemple, le plus prioritaire peut être celui qui a la puissance la plus importante, ou bien celui qui a la puissance la moins importante, ou encore celui dont l'usager a le plus besoin, ce besoin pouvant évoluer au cours du temps (et donc pouvant entraîner une modification des priorités).

Comme illustré sur la figure 1, ces première v1 et seconde v2 valeurs peuvent être fournies aux moyens de contrôle MCT par un calculateur de supervision CS qui est chargé de superviser le fonctionnement du système (ici un véhicule) S, et en particulier tout ce qui concerne la consommation de puissance électrique. Comme illustré non limitativement sur la figure 1, ce calculateur de supervision CS peut, par exemple, être chargé de fournir à chaque producteur d'énergie électrique PEj une information de pilotage définissant la puissance totale qu'il doit produire, par exemple pour brider ou augmenter temporairement la capacité de production d'électricité. Egalement comme illustré non limitativement sur la figure 1, chaque producteur d'énergie électrique PEj peut transmettre au calculateur de supervision CS et aux moyens de contrôle MCT au moins une information représentative de son état en cours, afin qu'ils puissent en tenir compte en cas de problème, par exemple en modifiant la valeur de la puissance électrique maximale pe_{mf}.

Chacune des première v1 et seconde v2 valeurs peut, par exemple être un pourcentage compris entre 0% et 100% de la puissance électrique maximale que peut fournir le système S à l'instant t considéré. On notera que ces première v1 et seconde v2 valeurs peuvent évoluer de façon linéaire entre 0% et 100% ou bien par palier (par exemple par incrément ou décrément de 20%).

La valeur de la puissance électrique maximale pe_{mf} peut être également fournie aux moyens de contrôle MCT par le calculateur de supervision CS. Cette puissance électrique maximale pe_{mf} peut éventuellement varier en fonction du type du producteur d'énergie électrique PEj (et donc de sa capacité de production). Par ailleurs, cette puissance électrique maximale pe_{mf} peut être paramétrable.

On a schématiquement représenté sur la figure 2 un exemple de diagramme d'évolution temporelle (t) des puissances électriques totale petot et maximale pe_{mf} que peut fournir un producteur d'énergie électrique PEj du système S et du besoin v1 en puissance électrique du réseau de consommation électrique RC du système S. Dans ce diagramme apparaissent une première zone Z1 qui représente la puissance électrique v1 demandée et consommée à chaque instant t par le réseau de consommation électrique RC, une deuxième zone Z2 qui représente la puissance électrique utilisable à chaque instant t par les moyens de chauffage électrique MCEk compte tenu de v1 et de la puissance électrique maximale pe_{mf}, et une troisième zone Z3 qui représente la puissance électrique de réserve pour le système S compte tenu des puissances électriques totale peₜₒₜ et maximale pe_{mf}.

Grâce à l'invention, on maximise la puissance électrique fournie par un producteur d'énergie électrique PEj tout en maintenant cette puissance à une valeur qui est inférieure à la puissance électrique maximale pe_{mf}. Cela permet d'optimiser la puissance électrique fournie aux moyens de chauffage électrique MCEk en prélevant la puissance électrique maximale au niveau du producteur d'énergie électrique PEj, tout en garantissant la qualité du réseau de consommation électrique RC ainsi que l'état de charge de chaque éventuel stockeur d'énergie électrique SE. Il en résulte une amélioration de la puissance thermique restituée par les moyens de chauffage électrique MCEk grâce à l'optimisation de la puissance prélevée sur le producteur PEj (stratégie PWM) (par exemple en présence d'un climat froid ou très froid). En outre, cela permet d'éviter d'avoir à utiliser des producteurs d'énergie électrique en plus grand nombre et/ou plus puissants.

On notera que dans l'étape du procédé, on (les moyens de commande MCD) peu(ven)t générer une commande cdk dite à modulation de largeur d'impulsion (ou PWM (Pulse Width Modulation)) qui impose une alternance choisie entre les premier e1 et second e2 états pour le moyen d'interruption Mlk associé au moyen de chauffage électrique MCEk qui a une priorité minimale parmi des priorités attribuées aux moyens de chauffage électrique MCEk devant être utilisés, et une commande cdk qui impose le second état (passant) e2 pour chaque moyen d'interruption Mlk associé à un moyen de chauffage électrique MCEk ayant une priorité supérieure à cette priorité minimale, lorsque la somme sv des première v1 et seconde v2 valeurs est inférieure ou égale à la puissance électrique maximale pe_{mf}.

Dans ce qui suit, on appelle troisième état e3 ou état automatique l'état qui est imposé à un moyen d'interruption Mlk par une commande PWM cdk pour adapter automatiquement la puissance électrique fournie au moyen de chauffage électrique MCEk associé en fonction de la somme sv, au moins lorsque cette dernière sv est supérieure ou égale à la puissance électrique maximale pe_{mf}.

On comprendra qu'en présence de l'option décrite ci-avant, quand sv < pe_{mf}, le moyen de chauffage électrique MCEk qui a la priorité la plus faible (ou minimale) parmi toutes celles des moyens de chauffage électrique MCEk devant être utilisés reçoit une puissance électrique variable automatiquement en fonction de la somme sv (entre 0% et 100% de la puissance maximale prédéfinie pmp), et chaque moyen de chauffage électrique MCEk devant être utilisé et ayant une priorité supérieure à cette priorité la plus faible (ou minimale) reçoit une puissance électrique égale à 100% de la puissance maximale prédéfinie pmp.

On a schématiquement représenté sur la figure 3 :
- un exemple de diagramme d'évolution temporelle (t) du besoin total en puissance électrique sv du réseau de consommation électrique RC et des moyens de chauffage électrique MCEk devant être utilisés, et du besoin en puissance électrique v2 des moyens de chauffage électrique MCEk devant être utilisés, avec matérialisation de la puissance électrique maximale pe_{mf},
- un exemple de diagramme d'évolution temporelle (t) de la puissance électrique p1 effectivement fournie à ces moyens de chauffage électrique MCEk devant être utilisés, et
- trois commandes cd1 à cd3 générées respectivement pour les trois moyens d'interruption MI1 à MI3 qui sont associées respectivement aux trois moyens de chauffage électrique MCE1 à MCE3.

Dans cet exemple de la figure 3, on considère que le premier moyen de chauffage électrique MCE1 a la puissance la plus faible, par exemple égale à 400 W, le deuxième moyen de chauffage électrique MCE2 a une puissance intermédiaire, par exemple égale à 500 W, et le troisième moyen de chauffage électrique MCE3 a la puissance la plus forte, par exemple égale à 600 W. Par ailleurs, on considère ici que plus le moyen de chauffage électrique MCj a une puissance élevée, moins il est prioritaire. Par conséquent, le moyen de chauffage électrique MCj ayant la puissance la plus élevée est le moins prioritaire.

Comme on peut l'observer, dans un premier intervalle de temps I1, v2 = 0 ce qui signifie qu'il n'y a pas de besoin de chauffage dans le système S. Par conséquent, les commandes cd1 à cd3 sont par exemple égales à zéro (0) afin d'imposer le premier état (non passant) e1 aux trois moyens d'interruption MI1 à MI3.

Dans un deuxième intervalle de temps I2, la seconde valeur v2 correspond à un besoin de chauffage d'un premier niveau n1 pouvant être assuré par le premier moyen de chauffage électrique MCE1, et l'on a sv < pe_{mf}. Par conséquent, les commandes cd2 et cd3 sont égales à zéro (0) afin d'imposer le premier état (non passant) e1 aux deuxième MI2 et troisième MI3 moyens d'interruption, et la commande cd1 est par exemple égale à un (1) afin d'imposer le second état (passant) e2 au premier moyen d'interruption MI1.

Dans un troisième intervalle de temps I3, la seconde valeur v2 correspond à un besoin de chauffage d'un deuxième niveau n2 pouvant être assuré par les premier MCE1 et deuxième MCE2 moyens de chauffage électrique, et l'on a sv < pe_{mf}. Par conséquent, la commande cd3 est égale à zéro (0) afin d'imposer le premier état (non passant) e1 au troisième moyen d'interruption MI3, et les commandes cd1 et cd2 sont égales à un (1) afin d'imposer le second état (passant) e2 aux premier MI1 et deuxième MI2 moyens d'interruption.

Dans un quatrième intervalle de temps I4, la seconde valeur v2 correspond à un besoin de chauffage d'un troisième niveau n3 pouvant être assuré par les premier MCE1, deuxième MCE2 et troisième MCE3 moyens de chauffage électrique, et l'on a sv = pe_{mf}. Par conséquent, les commandes cd1 et cd2 sont égales à un (1) afin d'imposer le second état (passant) e2 aux premier MI1 et deuxième MI2 moyens d'interruption, et la commande cd3 est égale à PWM ou auto afin d'imposer le troisième état e3 (automatique) au troisième moyen d'interruption MI3 pour tenter de respecter la condition sv ≤ pe_{mf}.

Dans un cinquième intervalle de temps I5, la seconde valeur v2 correspond à un besoin de chauffage du deuxième niveau n2 pouvant être assuré par les premier MCE1 et deuxième MCE2 moyens de chauffage électrique, et l'on a sv > pe_{mf}. Par conséquent, la commande cd1 est égale à un (1) afin d'imposer le second état (passant) e2 au premier moyen d'interruption MI1, la commande cd3 est égale à zéro (0) afin d'imposer le premier état (non passant) e1 au troisième moyen d'interruption MI3, et la commande cd2 est égale à PWM ou auto afin d'imposer le troisième état e3 (automatique) au deuxième moyen d'interruption MI2.

Dans un sixième intervalle de temps I6, la seconde valeur v2 correspond à un besoin de chauffage du troisième niveau n3 pouvant être assuré par les premier MCE1, deuxième MCE2 et troisième MI3 moyens de chauffage électrique, et l'on a sv < pe_{mf}. Par conséquent, les commandes cd1 et cd2 sont égales à un (1) afin d'imposer le second état (passant) e2 aux premier MI1 et deuxième MI2 moyens d'interruption. Comme on a ici sv << pe_{mf}, alors la commande de pilotage cd3 du troisième moyen d'interruption MI3 est égale à un (1) pour qu'il soit passant (e2) et non pas piloté en PWM (état e3). Mais si la somme sv s'approche de pe_{mf} alors la commande de pilotage cd3 du troisième moyen d'interruption MI3 devient égale à PWM ou auto afin d'imposer le troisième état e3 (automatique).

Dans un septième intervalle de temps I7, la seconde valeur v2 correspond à un besoin de chauffage du deuxième niveau n2 pouvant être assuré par les premier MCE1 et deuxième MCE2 moyens de chauffage électrique, et l'on a sv < pe_{mf}. Par conséquent, la commande cd3 est égale à zéro (0) afin d'imposer le premier état (non passant) e1 au troisième moyen d'interruption MI3, la commande cd1 est égale à un (1) afin d'imposer le second état (passant) e2 au premier moyen d'interruption MI1. Comme on a ici sv << pe_{mf}, alors la commande de pilotage cd2 du deuxième moyen d'interruption MI2 est égale à un (1) pour qu'il soit passant (e2) et non pas piloté en PWM (état e3). Mais si la somme sv s'approche de pe_{mf} alors la commande de pilotage cd2 du deuxième moyen d'interruption MI2 devient égale à PWM ou auto afin d'imposer le troisième état e3 (automatique).

Dans un huitième intervalle de temps I8, la seconde valeur v2 correspond à un besoin de chauffage du premier niveau n1 pouvant être assuré par le premier moyen de chauffage électrique MCE1, et l'on a sv = pe_{mf}. Par conséquent, les commandes cd2 et cd3 sont égales à zéro (0) afin d'imposer le premier état (non passant) e1 aux deuxième MI2 et troisième MI3 moyens d'interruption, et la commande cd1 est égale à PWM ou auto afin d'imposer le troisième état e3 (automatique) au premier moyen d'interruption MI1.

Dans un neuvième intervalle de temps I9, la seconde valeur v2 correspond à un besoin de chauffage du premier niveau n1 pouvant être assuré par le premier moyen de chauffage électrique MCE1, et l'on a sv < pe_{mf}. Par conséquent, les commandes cd2 et cd3 sont égales à zéro (0) afin d'imposer le premier état (non passant) e1 aux deuxième MI2 et troisième MI3 moyens d'interruption. Comme on a ici sv << pe_{mf}, alors la commande de pilotage cd1 du premier moyen d'interruption MI1 est égale à un (1) pour qu'il soit passant (e2) et non pas piloté en PWM (état e3). Mais si la somme sv s'approche de pe_{mf} alors la commande de pilotage cd1 du premier moyen d'interruption MI1 devient égale à PWM ou auto afin d'imposer le troisième état e3 (automatique).

Dans un dixième intervalle de temps I10, v2 = 0 ce qui signifie qu'il n'y a pas de besoin de chauffage dans le système S. Par conséquent, les commandes cd1 à cd3 sont égales à zéro (0) afin d'imposer le premier état (non passant) e1 aux trois moyens d'interruption MI1 à MI3.

La mise en œuvre du procédé de contrôle selon l'invention peut par exemple se faire comme décrit ci-dessous en référence à l'exemple d'algorithme illustré sur la figure 4.

Dans une première sous-étape 10 de l'étape du procédé on peut déterminer chaque moyen de chauffage électrique MCEk devant être utilisé en fonction d'une puissance maximale autorisée pma. Puis, dans une deuxième sous-étape 20 de l'étape du procédé on peut attribuer un classement d'utilisation cun(k) à chacun des moyens de chauffage électrique MCEk déterminés, arbitrairement lorsque leurs puissances sont identiques ou en fonction de leur puissances lorsqu'elles sont différentes.

Le classement d'utilisation cun(k) correspond à la priorité décrite plus haut. Dans le cas de moyens de chauffage électrique MCEk ayant des puissances égales, le classement d'utilisation cun(k), et donc le niveau de priorité, est attribué arbitrairement. Par exemple, le classement d'utilisation cun(k) le plus grand (en valeur) est le moins prioritaire. Mais l'inverse est également possible.

Ici, n varie de 1 à nt, où nt est le nombre total de moyens de chauffage électrique MCEk déterminés (et donc devant être utilisés). Par exemple, le classement d'utilisation cun(k) le plus prioritaire est ici attribué au moyen de chauffage électrique MCEk ayant la puissance la plus faible parmi toutes celles des moyens de chauffage électrique MCEk déterminés.

Puis, dans une troisième sous-étape 30 de l'étape du procédé on peut déterminer un producteur d'énergie électrique PEj pouvant fournir la puissance électrique maximale pe_{mf}. On détermine en fonction de l'état du/des producteur(s) d'énergie électrique PEj quelles sont les informations à utiliser pour piloter les moyens de chauffage électrique MCEk.

On notera qu'en présence d'un stockeur d'énergie électrique SE, lorsqu'aucun producteur d'énergie électrique PEj ne peut fournir cette puissance électrique maximale pe_{mf}, on détermine ce stockeur d'énergie électrique SE, afin de l'utiliser pour alimenter en puissance électrique les moyens de chauffage électrique MCEk déterminés dans la première sous-étape 10. En fait, on utilise les informations du stockeur d'énergie électrique SE pour gérer les activations / désactivations des moyens de chauffage électrique MCEk. Lorsque le stockeur d'énergie électrique SE est utilisé en tant que producteur (et donc qu'aucun producteur d'énergie électrique PEj ne produit de puissance électrique), le dispositif de contrôle DC détermine les consignes de pilotage non plus avec les informations des producteurs d'énergie électrique PEj mais en fonction de l'état du stockeur d'énergie électrique SE.

Puis, dans une quatrième sous-étape 40 de l'étape du procédé on peut déterminer une commande cdk pour chacun des moyens de chauffage électrique MCEk déterminés dans la première sous-étape 10, en fonction de son classement d'utilisation cun(k). Chaque valeur d'une commande cdk peut alors être déterminée au moyen d'un algorithme du type de celui décrit plus loin à titre d'exemple en référence à la figure 5.

Ainsi, dans le cas du système S de la figure 1, si la puissance maximale autorisée pma est la puissance intermédiaire (ici égale à 500 W), alors la détermination effectuée dans la première sous-étape 10 ne retient que les premier MCE1 et deuxième MCE2 moyens de chauffage électrique. Par conséquent, on attribue, ici (compte tenu du choix illustratif effectué plus haut), le classement d'utilisation le plus prioritaire cu1 au premier moyen de chauffage électrique MCE1 du fait qu'il a la puissance la plus faible (ici égale à 400 W) et le classement d'utilisation intermédiaire cu2 au deuxième moyen de chauffage électrique MCE2 du fait qu'il a la puissance intermédiaire (ici égale à 500 W). On peut ainsi constituer une matrice de type 1×N où N est le nombre total de moyens de chauffage électrique MCEk du système S et chaque élément de matrice est le classement d'utilisation cun(k) du moyen de chauffage électrique MCEk correspondant.

On notera que dans la quatrième sous-étape 40 de l'étape du procédé on peut, par exemple, générer simultanément les commandes cdk des moyens de chauffage électrique MCEk déterminés dans la première sous-étape 10, en fonction de leurs classements d'utilisation respectifs.

En variante, dans la quatrième sous-étape 40 de l'étape du procédé on peut, par exemple, générer les commandes cdk des moyens de chauffage électrique MCEk déterminés dans la première sous-étape 10 les unes après les autres en commençant par celle du moyen de chauffage électrique MCEk qui a le classement d'utilisation cun(k) le plus prioritaire (ici cu1 (1)).

On notera également que la quatrième sous-étape 40 de l'étape du procédé peut être mise en œuvre de différentes façons. L'une de ces façons est décrite ci-après en référence à l'exemple non limitatif d'algorithme illustré sur la figure 5. Il est important de noter que cet algorithme est utilisé pour chaque moyen de chauffage électrique MCEk et qu'à chaque fois il prend en compte l'état d'activation du moyen de chauffage électrique MCEk' ayant un classement d'utilisation cun(k') plus prioritaire d'une unité que le sien (cun(k)), s'il existe, et l'état d'activation du moyen de chauffage électrique MCEk" ayant un classement d'utilisation cun(k") moins prioritaire d'une unité que le sien (cun(k)), s'il existe.

Dans une première phase 401, on peut effectuer un premier test pour déterminer si un moyen de chauffage électrique MCEk n'est pas autorisé à être utilisé compte tenu de la puissance maximale autorisée pma (ce qui est par exemple défini dans la matrice précitée). Dans la négative (non), et donc si il (MCEk) peut être utilisé, on effectue dans une deuxième phase 402 un deuxième test pour comparer son classement d'utilisation cun(k) au nombre total nt de moyens de chauffage électrique MCEk autorisés à être utilisés.

Si l'on a cun(k) = nt, cela signifie que l'on s'occupe du moyen de chauffage électrique MCEk ayant le classement d'utilisation cun(k) le plus grand (et donc ici le moins prioritaire) et donc qui n'est peut-être pas déjà alimenté. Par conséquent, on effectue dans une troisième phase 403 un troisième test afin de déterminer s'il existe effectivement un producteur d'énergie électrique PEj pouvant fournir la puissance électrique maximale pe_{mf}. Dans l'affirmative (oui), on génère dans une quatrième phase 404 une commande cdk égale à PWM ou auto afin d'imposer le troisième état e3 (automatique) au moyen d'interruption Mlk associé au moyen de chauffage électrique MCEk pour qu'il alimente ce dernier (MCEk) de façon adaptée avec de la puissance électrique fournie par le producteur d'énergie électrique PEj identifié dans la troisième phase 403, puis on met fin à l'algorithme. A cet effet, on utilise les informations du producteur d'énergie électrique PEj pour déterminer la commande cdk à appliquer. Dans la négative (non), cela signifie que l'on va devoir utiliser le stockeur d'énergie électrique SE. Par conséquent, on génère dans une cinquième phase 405 une commande cdk égale à PWM ou auto afin d'imposer le troisième état e3 (automatique) au moyen d'interruption Mlk associé au moyen de chauffage électrique MCEk pour qu'il alimente ce dernier (MCEk) de façon adaptée avec de la puissance électrique fournie par le stockeur d'énergie électrique SE identifié dans la troisième phase 403, puis on met fin à l'algorithme. A cet effet, on utilise les informations du stockeur d'énergie électrique SE pour déterminer la commande cdk à appliquer.

Si l'on a cun(k) > nt, cela signifie que l'on s'occupe d'un moyen de chauffage électrique MCEk ayant un classement d'utilisation cun(k) supérieur à celui qui est le plus grand (et donc ici le moins prioritaire) et donc qui n'a pas à être alimenté. Par conséquent, on génère dans une sixième phase 406 une commande cdk égale à zéro (0) afin d'imposer (ou maintenir) le premier état (non passant) e1 au moyen d'interruption Mlk associé au moyen de chauffage électrique MCEk pour qu'il empêche l'alimentation de ce dernier (MCEk). Puis, on met fin à l'algorithme. On notera que si le premier test effectué dans la première phase 401 est positif (oui), et donc si le moyen de chauffage électrique MCEk ne peut pas être utilisé, on effectue également cette sixième phase 406.

Si l'on a cun(k) < nt, cela signifie que l'on s'occupe d'un moyen de chauffage électrique MCEk qui a un classement d'utilisation cun(k) inférieur à celui qui est le plus grand (et donc ici le moins prioritaire) et donc qui est déjà alimenté. Par conséquent, on génère dans une septième phase 407 une commande cdk égale à un (1) afin d'imposer (ou maintenir) le second état (passant) e2 au moyen d'interruption Mlk associé au moyen de chauffage électrique MCEk pour qu'il alimente ce dernier (MCEk) avec de la puissance électrique fournie par le producteur d'énergie électrique PEj en cours d'utilisation. Puis, on met fin à l'algorithme.

On notera que dans la quatrième phase 404 la commande cdk peut être générée en fonction de la somme sv et de la tension URC aux bornes du réseau de consommation électrique RC, mais aussi de premier s1 et second s2 seuils, avec s2 < s1. Cette génération peut alors par exemple se faire selon les conditions décrites ci-dessous lorsqu'un producteur d'énergie électrique PEj peut fournir la puissance électrique maximale pe_{mf} :
- on peut générer une commande cdk fonction de la somme sv des première v1 et seconde v2 valeurs lorsque cette somme sv est strictement supérieure à la puissance électrique maximale pe_{mf} et la tension URC est supérieure au premier seuil s1, aberrante (ou trop élevée) ou inférieure au second seuil s2, ou bien lorsque cette somme sv est inférieure ou égale à la puissance électrique maximale pe_{mf} et la tension URC est aberrante (ou trop élevée) ou inférieure au second seuil s2,
- on peut générer une commande cdk fonction de la somme sv et de la tension URC lorsque cette somme sv est strictement supérieure à la puissance électrique maximale pe_{mf} et la tension URC est comprise entre les premier s1 et second s2 seuils,
- on peut générer une commande cdk fonction de la tension URC lorsque la somme sv est inférieure ou égale à la puissance électrique maximale pe_{mf} et la tension URC est comprise entre les premier s1 et second s2 seuils,
- on peut générer une commande cdk imposant le second état (passant) e2 lorsque la somme sv est inférieure ou égale à la puissance électrique maximale pe_{mf} et la tension URC est supérieure au premier seuil s1.

On notera également que dans la cinquième phase 405 la commande cdk peut être générée en fonction de l'état de charge (ou SOC (« State Of Charge »)) ec du stockeur d'énergie électrique SE et de la tension URC aux bornes du réseau de consommation électrique RC, mais aussi d'états de charge minimum (ou bas) ecmin et maximum (ou haut) ecmax, de premier s1' et second s2' seuils, avec s2' (seuil de sécurité pour un mode prioritaire) < s1', et d'un troisième seuil s3' égal au second seuil s2' plus une valeur d'hystérésis vh (soit s3' = s2' + vh).

Cette génération peut alors par exemple se faire selon les conditions décrites ci-dessous lorsqu'un stockeur d'énergie électrique SE peut fournir de la puissance électrique pe :
- on peut générer une commande cdk fonction de l'état de charge ec du stockeur d'énergie électrique SE lorsque cet état de charge ec est compris entre les états de charge minimum ecmin et maximum ecmax et la tension URC est supérieure au premier seuil s1' ou aberrante,
- on peut générer une commande cdk fonction de l'état de charge ec et de la tension URC lorsque cet état de charge ec est compris entre les états de charge minimum ecmin et maximum ecmax et la tension URC est comprise entre le second seuil s2' et le premier seuil s1',
- on peut générer une commande cdk fonction de la tension URC lorsque l'état de charge ec est supérieur à l'état de charge maximum ecmax et la tension URC est comprise entre les second s2' et premier s1' seuils,
- on peut générer une commande cdk imposant le second état (passant) e2 lorsque l'état de charge ec est supérieur à l'état de charge maximum ecmax et la tension URC est supérieure au premier seuil s1' ou aberrante,
- on peut générer une commande cdk imposant le premier état (non passant) e1 lorsque l'état de charge ec est supérieur à l'état de charge maximum ecmax et la tension URC est inférieure au troisième seuil s3', ou bien lorsque l'état de charge ec est compris entre les états de charge minimum ecmin et maximum ecmax et la tension URC est inférieure au troisième seuil s3',
- on peut générer une commande cdk imposant le premier état (non passant) e1 (pour chaque moyen d'interruption MI1) lorsque l'état de charge ec est strictement inférieur à l'état de charge minimum ecmin, quelle que soit la valeur de la tension URC.

L'état de charge ec du stockeur d'énergie électrique SE est fourni par ce dernier (SE) au calculateur de supervision CS et aux moyens de contrôle MCT (et plus précisément aux moyens de commande MCD), comme illustré non limitativement sur la figure 1.

## Revendications

1. Procédé de contrôle d'alimentation électrique pour un système (S) comprenant au moins un producteur d'énergie électrique (PEj) couplé en parallèle à un réseau de consommation électrique (RC) et à au moins deux moyens de chauffage électrique (MCEk) ayant des puissances, le procédé comprenant une étape dans laquelle on génère pour des moyens d'interruption (Mlk), en nombre égal au nombre de moyens de chauffage électrique (MCEk), installés entre chaque producteur d'énergie électrique (PEj) et l'un desdits moyens de chauffage électrique (MCEk) et pouvant être placés selon une commande dans un premier état empêchant totalement l'alimentation en puissance électrique du moyen de chauffage électrique (MCEk) associé ou un second état alimentant le moyen de chauffage électrique (MCEk) associé avec une puissance électrique égale à 100% d'une puissance maximale prédéfinie, des commandes en fonction d'une puissance électrique maximale pouvant être fournie et de première et seconde valeurs, la première valeur définissant des besoins de puissance électrique pour ledit réseau de consommation électrique (RC) et la seconde valeur définissant des besoins de puissance électrique pour lesdits moyens de chauffage électrique (MCEk), **caractérisé en ce qu'**une commande imposant ledit premier état est générée pour un moyen d'interruption (Mlk) associé à un moyen de chauffage électrique (MCEk) ayant une priorité minimale parmi des priorités attribuées aux moyens de chauffage électrique (MCEk) devant être utilisés, lorsqu'une somme desdites première et seconde valeurs est strictement supérieure à ladite puissance électrique maximale, et **en ce que** dans ladite étape on génère une commande dite à modulation de largeur d'impulsion imposant une alternance choisie entre lesdits premier et second états pour le moyen d'interruption (Mlk) associé au moyen de chauffage électrique (MCEk) ayant une priorité minimale parmi des priorités attribuées aux moyens de chauffage électrique (MCEk) devant être utilisés, et une commande imposant ledit second état pour chaque moyen d'interruption (Mlk) associé à un moyen de chauffage électrique (MCEk) ayant une priorité supérieure à cette priorité minimale, lorsque ladite somme des première et seconde valeurs est inférieure ou égale à ladite puissance électrique maximale.

2. Procédé selon la revendication 1, **caractérisé en ce que** dans ladite étape on détermine chaque moyen de chauffage électrique (MCEk) devant être utilisé en fonction d'une puissance maximale autorisée, puis on attribue un classement d'utilisation à chacun desdits moyens de chauffage électrique (MCEk) déterminés, arbitrairement lorsque leurs puissances sont identiques ou en fonction de leur puissances lorsqu'elles sont différentes, puis on détermine un producteur d'énergie électrique (PEj) pouvant fournir ladite puissance électrique maximale, puis on détermine une commande pour chacun desdits moyens de chauffage électrique (MCEk) déterminés en fonction de son classement d'utilisation.

3. Procédé selon la revendication 2, **caractérisé en ce que** dans ladite étape, en présence d'au moins un stockeur d'énergie électrique (SE) couplé en parallèle à chaque producteur d'énergie électrique (PEj) et audit réseau de consommation électrique (RC), et lorsqu'aucun producteur d'énergie électrique (PEj) ne peut fournir ladite puissance électrique maximale, on utilise ledit stockeur d'énergie électrique (SE) pour alimenter en puissance électrique lesdits moyens de chauffage électrique (MCEk) déterminés.

4. Procédé selon la revendication 2 ou 3, **caractérisé en ce que** dans ladite étape on génère simultanément lesdites commandes desdits moyens de chauffage électrique (MCEk) déterminés en fonction de leurs classements d'utilisation respectifs.

5. Procédé selon la revendication 2 ou 3, **caractérisé en ce que** dans ladite étape on génère lesdites commandes des moyens de chauffage électrique (MCEk) déterminés les unes après les autres en commençant par celle du moyen de chauffage électrique (MCEk) ayant le classement d'utilisation le plus prioritaire.

6. Procédé selon l'une des revendications 1 à 5, **caractérisé en ce que** dans ladite étape on génère lesdites commandes des moyens de chauffage électrique (MCEk) déterminés en fonction également d'une tension aux bornes dudit réseau de consommation électrique (RC).

7. Procédé selon la revendication 6, **caractérisé en ce que** dans ladite étape, lorsqu'un producteur d'énergie électrique (PEj) peut fournir ladite puissance électrique maximale, on génère soit une commande fonction de ladite somme des première et seconde valeurs lorsque cette somme est strictement supérieure à ladite puissance électrique maximale et ladite tension aux bornes dudit réseau de consommation électrique (RC) est supérieure à un premier seuil, aberrante ou inférieure à un second seuil inférieur audit premier seuil, ou bien lorsque cette somme est inférieure ou égale à ladite puissance électrique maximale et ladite tension aux bornes dudit réseau de consommation électrique (RC) est aberrante ou inférieure audit second seuil, soit une commande fonction de ladite somme des première et seconde valeurs et de ladite tension aux bornes dudit réseau de consommation électrique (RC) lorsque cette somme est strictement supérieure à ladite puissance électrique maximale et ladite tension aux bornes dudit réseau de consommation électrique (RC) est comprise entre lesdits premier et second seuils, soit une commande fonction de ladite tension aux bornes dudit réseau de consommation électrique (RC) lorsque cette somme est inférieure ou égale à ladite puissance électrique maximale et ladite tension aux bornes dudit réseau de consommation électrique (RC) est comprise entre lesdits premier et second seuils, soit encore une commande imposant ledit second état lorsque ladite somme des première et seconde valeurs est inférieure ou égale à ladite puissance électrique maximale et ladite tension aux bornes dudit réseau de consommation électrique (RC) est supérieure audit premier seuil.

8. Procédé selon la revendication 6 prise en combinaison avec la revendication 3, **caractérisé en ce que** dans ladite étape, lorsque seul ledit stockeur d'énergie électrique (SE) peut fournir de la puissance électrique, on génère soit une commande fonction d'un état de charge dudit stockeur d'énergie électrique (SE) lorsque cet état de charge est compris entre des états de charge minimum et maximum et ladite tension aux bornes dudit réseau de consommation électrique (RC) est supérieure à un premier seuil ou aberrante, soit une commande fonction dudit état de charge et de ladite tension aux bornes dudit réseau de consommation électrique (RC) lorsque cet état de charge est compris entre des états de charge minimum et maximum et ladite tension aux bornes dudit réseau de consommation électrique (RC) est comprise entre un second seuil, inférieur audit premier seuil, et ledit premier seuil, soit une commande fonction de ladite tension aux bornes dudit réseau de consommation électrique (RC) lorsque cet état de charge est supérieur audit état de charge maximum et ladite tension aux bornes dudit réseau de consommation électrique (RC) est comprise entre lesdits second et premier seuils, soit une commande imposant ledit second état lorsque ledit état de charge est supérieur audit état de charge maximum et ladite tension aux bornes dudit réseau de consommation électrique (RC) est supérieure audit premier seuil ou aberrante, soit une commande imposant ledit premier état lorsque ledit état de charge est supérieur audit état de charge maximum et ladite tension aux bornes dudit réseau de consommation électrique (RC) est inférieure à un troisième seuil, égal audit second seuil plus une valeur d'hystérésis, ou bien lorsque ledit état de charge est compris entre lesdits états de charge minimum et maximum et ladite tension aux bornes dudit réseau de consommation électrique (RC) est inférieure audit troisième seuil, soit encore une commande imposant ledit premier état lorsque ledit état de charge est strictement inférieur audit état de charge minimum.

9. Dispositif de contrôle (DC) pour un système (S) comprenant au moins un producteur d'énergie électrique (PEj) couplé en parallèle à un réseau de consommation électrique (RC) et à au moins deux moyens de chauffage électrique (MCEk) ayant des puissances, le dispositif de contrôle comprenant i) des moyens d'interruption (Mlk) en nombre égal au nombre de moyens de chauffage électrique (MCEk), destinés chacun à être installés entre lesdits producteur(s) d'énergie électrique (PEj) et stockeur(s) d'énergie électrique (SE) et l'un desdits moyens de chauffage électrique (MCEk) et pouvant être placés selon une commande dans un premier état empêchant totalement l'alimentation en puissance électrique du moyen de chauffage électrique (MCEk) associé ou un second état alimentant le moyen de chauffage électrique (MCEk) associé avec une puissance électrique égale à 100% d'une puissance maximale prédéfinie, et ii) des moyens de commande (MCD) générant chacune desdites commandes en fonction d'une puissance électrique maximale pouvant être fournie et de première et seconde valeurs, la première valeur définissant des besoins de puissance électrique respectivement pour ledit réseau de consommation électrique (RC) et la seconde valeur définissant des besoins de puissance électrique pour lesdits moyens de chauffage électrique (MCEk), **caractérisé en ce que** lesdits moyens de commande (MCD) sont configurés pour générer une commande imposant ledit premier état pour un moyen d'interruption (Mlk) associé à un moyen de chauffage électrique (MCEk) ayant une priorité minimale parmi des priorités attribuées aux moyens de chauffage électrique (MCEk) devant être utilisés, lorsqu'une somme desdites première et seconde valeurs est strictement supérieure à ladite puissance électrique maximale et **en ce que** lesdits moyens de commande (MCD) sont, en outre, configurés pour générer une commande dite à modulation de largeur d'impulsion imposant une alternance choisie entre lesdits premier et second états pour le moyen d'interruption (Mlk) associé au moyen de chauffage électrique (MCEk) ayant une priorité minimale parmi des priorités attribuées aux moyens de chauffage électrique (MCEk) devant être utilisés, et une commande imposant ledit second état pour chaque moyen d'interruption (Mlk) associé à un moyen de chauffage électrique (MCEk) ayant une priorité supérieure à cette priorité minimale, lorsque ladite somme des première et seconde valeurs est inférieure ou égale à ladite puissance électrique maximale.

## Patentansprüche

1. Verfahren zur Steuerung der Stromversorgung für ein System (S), das mindestens einen Erzeuger elektrischer Energie (PEj), der parallel mit einem Stromverbrauchsnetz (RC) gekoppelt ist, und mindestens zwei elektrische Heizmittel (MCEk) mit Leistungen umfasst, wobei das Verfahren einen Schritt umfasst, in dem man für Unterbrechungsmittel (Mlk), deren Anzahl gleich der Anzahl der elektrischen Heizmittel (MCEk) ist, einen ersten Zustand erzeugt, in dem die Unterbrechungsmittel (Mlk) einen zweiten Zustand einnehmen, die zwischen jedem Erzeuger elektrischer Energie (PEj) und einem der elektrischen Heizmittel (MCEk) installiert sind und gemäß einem Befehl in einen ersten Zustand gebracht werden können, der die Versorgung des zugehörigen elektrischen Heizmittels (MCEk) mit elektrischer Leistung vollständig verhindert, oder in einen zweiten Zustand, der das zugehörige elektrische Heizmittel (MCEk) mit einer elektrischen Leistung versorgt, die gleich 100% einer vordefinierten maximalen Leistung ist, Befehle in Abhängigkeit von einer maximal lieferbaren elektrischen Leistung und einem ersten und zweiten Wert, wobei der erste Wert den Bedarf an elektrischer Leistung für das Stromverbrauchsnetz (RC) und der zweite Wert den Bedarf an elektrischer Leistung für das elektrische Heizmittel (MCEk) definiert, **dadurch gekennzeichnet, dass** ein Befehl, der den ersten Zustand erzwingt, für ein Unterbrechungsmittel (Mlk) erzeugt wird, das mit einem elektrischen Heizmittel (MCEk) verbunden ist, das eine minimale Priorität unter Prioritäten hat, die den zu verwendenden elektrischen Heizmitteln (MCEk) zugewiesen sind, wenn eine Summe des ersten und des zweiten Werts strikt größer als die maximale elektrische Leistung ist, und dass in dem Schritt eine sogenannte pulsbreitenmodulierte Steuerung erzeugt wird, die einen zwischen dem ersten und dem zweiten Zustand gewählten Wechsel für das Unterbrechungsmittel (Mlk) erzwingt, das dem elektrischen Heizmittel (MCEk) zugeordnet ist, das eine minimale Priorität unter den Prioritäten hat, die den zu verwendenden elektrischen Heizmitteln (MCEk) zugewiesen sind, und einen Befehl, der den zweiten Zustand für jedes Unterbrechungsmittel (Mlk) erzwingt, das einem elektrischen Heizmittel (MCEk) zugeordnet ist, das eine höhere Priorität als diese minimale Priorität hat, wenn die Summe des ersten und des zweiten Werts kleiner oder gleich der maximalen elektrischen Leistung ist.

2. Verfahren nach Anspruch 1, **dadurch gekennzeichnet, dass** in dem Schritt jedes elektrische Heizmittel (MCEk), das verwendet werden soll, in Abhängigkeit von einer maximal zulässigen Leistung bestimmt wird, und dann jedem der bestimmten elektrischen Heizmittel (MCEk) eine Nutzungsrangfolge zugewiesen wird, willkürlich, wenn ihre Leistungen identisch sind, oder in Abhängigkeit von ihren Leistungen, wenn sie unterschiedlich sind, dann bestimmt man einen Erzeuger elektrischer Energie (PEj), der die maximale elektrische Leistung liefern kann, dann bestimmt man eine Steuerung für jedes der bestimmten elektrischen Heizmittel (MCEk) in Abhängigkeit von seiner Nutzungsklassifizierung.

3. Verfahren nach Anspruch 2, **dadurch gekennzeichnet, dass** in diesem Schritt bei Vorhandensein mindestens eines elektrischen Energiespeichers (SE), der parallel mit jedem elektrischen Energieerzeuger (PEj) und dem elektrischen Verbrauchsnetz (RC) gekoppelt ist, und wenn kein elektrischer Energieerzeuger (PEj) die maximale elektrische Leistung liefern kann, der elektrische Energiespeicher (SE) verwendet wird, um die bestimmten elektrischen Heizmittel (MCEk) mit elektrischer Leistung zu versorgen.

4. Verfahren nach Anspruch 2 oder 3, **dadurch gekennzeichnet, dass** in diesem Schritt gleichzeitig die Steuerungen der bestimmten elektrischen Heizmittel (MCEk) in Abhängigkeit von ihren jeweiligen Nutzungsklassifizierungen erzeugt werden.

5. Verfahren nach Anspruch 2 oder 3, **dadurch gekennzeichnet, dass** in dem Schritt die Befehle der ermittelten elektrischen Heizmittel (MCEk) nacheinander erzeugt werden, beginnend mit dem Befehl des elektrischen Heizmittels (MCEk) mit der vorrangigsten Nutzungsklassifizierung.

6. Verfahren nach einem der Ansprüche 1 bis 5, **dadurch gekennzeichnet, dass** in diesem Schritt die Steuerungen der bestimmten elektrischen Heizmittel (MCEk) auch in Abhängigkeit von einer Spannung an den Klemmen des Stromverbrauchsnetzes (RC) erzeugt werden.

7. Verfahren nach Anspruch 6, **dadurch gekennzeichnet, dass** in diesem Schritt, wenn ein elektrischer Energieerzeuger (PEj) die maximale elektrische Leistung liefern kann, entweder ein Befehl erzeugt wird, der von der Summe des ersten und des zweiten Wertes abhängt, wenn diese Summe strikt größer als die maximale elektrische Leistung ist und die Spannung an den Klemmen des elektrischen Verbrauchsnetzes (RC) größer als ein erster Schwellenwert ist, abweichend oder kleiner als ein zweiter Schwellenwert ist, der unter dem ersten Schwellenwert liegt, oder wenn diese Summe kleiner oder gleich der maximalen elektrischen Leistung ist und die Spannung an den Klemmen des Stromverbrauchsnetzes (RC) abweichend oder kleiner als der zweite Schwellenwert ist, oder eine Steuerung in Abhängigkeit von der Summe des ersten und des zweiten Werts und der Spannung an den Anschlüssen des Stromverbrauchsnetzes (RC), wenn diese Summe strikt größer als die maximale elektrische Leistung ist und die Spannung an den Anschlüssen des Stromverbrauchsnetzes (RC) zwischen dem ersten und dem zweiten Schwellenwert liegt, oder eine Steuerung, die von der Spannung an den Klemmen des Stromverbrauchsnetzes (RC) abhängt, wenn diese Summe kleiner oder gleich der maximalen elektrischen Leistung ist und die Spannung an den Klemmen des Stromverbrauchsnetzes (RC) zwischen dem ersten und dem zweiten Schwellenwert liegt, oder noch eine Steuerung, die den zweiten Zustand erzwingt, wenn die Summe des ersten und des zweiten Werts kleiner oder gleich der maximalen elektrischen Leistung ist und die Spannung an den Klemmen des Stromverbrauchsnetzes (RC) über dem ersten Schwellenwert liegt.

8. Verfahren nach Anspruch 6 in Kombination mit Anspruch 3, **dadurch gekennzeichnet, dass** in diesem Schritt, wenn nur der elektrische Energiespeicher (SE) elektrische Leistung liefern kann, entweder eine Steuerung in Abhängigkeit von einem Ladezustand des elektrischen Energiespeichers (SE) erzeugt wird, wenn dieser Ladezustand zwischen einem minimalen und einem maximalen Ladezustand liegt und die Spannung an den Klemmen des elektrischen Verbrauchsnetzes (RC) über einem ersten Schwellenwert liegt oder abweichend ist, oder eine Steuerung, die von dem Ladezustand und der Spannung an den Klemmen des Stromverbrauchsnetzes (RC) abhängt, wenn dieser Ladezustand zwischen minimalen und maximalen Ladezuständen liegt und die Spannung an den Klemmen des Stromverbrauchsnetzes (RC) zwischen einem zweiten Schwellenwert, der niedriger als der erste Schwellenwert ist, und dem ersten Schwellenwert liegt, entweder eine Steuerung in Abhängigkeit von der Spannung an dem Stromverbrauchsnetz (RC), wenn dieser Ladezustand größer als der maximale Ladezustand ist und die Spannung an dem Stromverbrauchsnetz (RC) zwischen dem zweiten und dem ersten Schwellenwert liegt, oder eine Steuerung, die den zweiten Zustand erzwingt, wenn der Ladezustand größer als der maximale Ladezustand ist und die Spannung an dem Stromverbrauchsnetz (RC) größer als der erste Schwellenwert ist oder ausreißt, oder eine Steuerung, die den ersten Zustand vorschreibt, wenn der Ladezustand größer als der maximale Ladezustand ist und die Spannung an den Anschlüssen des Stromverbrauchsnetzes (RC) unter einem dritten Schwellenwert liegt, der gleich dem zweiten Schwellenwert plus einem Hysteresewert ist, oder wenn der Ladezustand zwischen dem minimalen und dem maximalen Ladezustand liegt und die Spannung an den Anschlüssen des Stromverbrauchsnetzes (RC) unter dem dritten Schwellenwert liegt, oder noch eine Steuerung, die den ersten Zustand vorschreibt, wenn der Ladezustand strikt unter dem minimalen Ladezustand liegt.

9. Steuervorrichtung (DC) für ein System (S) mit mindestens einem elektrischen Energieerzeuger (PEj), der parallel mit einem Stromverbrauchsnetz (RC) und mit mindestens zwei elektrischen Heizmitteln (MCEk) mit Leistungen gekoppelt ist, wobei die Steuervorrichtung i) Unterbrechungsmittel (Mlk) in einer Anzahl, die gleich der Anzahl der elektrischen Heizmittel (MCEk) ist, umfasst, die jeweils dazu bestimmt sind, zwischen dem/den elektrischen Energieerzeuger(n) (PEj) und dem/den elektrischen Energiespeicher(n) (SE) und einem der elektrischen Heizmittel (MCEk) installiert zu werden, und die gemäß einer Steuerung in einen ersten Zustand, der die Versorgung des zugehörigen elektrischen Heizmittels (MCEk) mit elektrischer Leistung vollständig verhindert, oder in einen zweiten Zustand, der das zugehörige elektrische Heizmittel (MCEk) mit einer elektrischen Leistung versorgt, die gleich 100% einer vorgegebenen maximalen Leistung ist, gebracht werden können, und ii) Steuermittel (MCD), die jeden der Befehle in Abhängigkeit von einer maximal lieferbaren elektrischen Leistung und einem ersten und einem zweiten Wert erzeugen, wobei der erste Wert den Bedarf an elektrischer Leistung jeweils für das Stromverbrauchsnetz (RC) definiert und der zweite Wert den Bedarf an elektrischer Leistung für die elektrischen Heizmittel (MCEk) definiert, **dadurch gekennzeichnet, dass** die Steuermittel (MCD) so konfiguriert sind, dass sie einen Befehl erzeugen, der den ersten Zustand für ein Unterbrechungsmittel (Mlk) erzwingt, das einem elektrischen Heizmittel (MCEk) zugeordnet ist, das eine minimale Priorität unter den Prioritäten hat, die den zu verwendenden elektrischen Heizmitteln (MCEk) zugeordnet sind, wenn eine Summe des ersten und des zweiten Wertes strikt größer als die maximale elektrische Leistung ist, und dass die Steuermittel (MCD) außerdem, konfiguriert sind, um eine sogenannte pulsbreitenmodulierte Steuerung zu erzeugen, die einen zwischen dem ersten und dem zweiten Zustand ausgewählten Wechsel für das Unterbrechungsmittel (Mlk) erzwingt, das dem elektrischen Heizmittel (MCEk) zugeordnet ist, das eine minimale Priorität unter den Prioritäten hat, die den zu verwendenden elektrischen Heizmitteln (MCEk) zugewiesen sind, und eine Steuerung, die den zweiten Zustand für jedes Unterbrechungsmittel (Mlk) erzwingt, das einem elektrischen Heizmittel (MCEk) zugeordnet ist, das eine höhere Priorität als diese minimale Priorität hat, wenn die Summe des ersten und des zweiten Wertes kleiner oder gleich der maximalen elektrischen Leistung ist.

## Claims

1. A method of controlling electrical power supply for a system (S) comprising at least one electrical energy producer (PEj) coupled in parallel to an electrical consumption network (RC) and to at least two electrical heating means (MCEk) having powers, the method comprising a step in which an interruption means (Mlk) is generated, equal in number to the number of electrical heating means (MCEk), installed between each electric power producer (PEj) and one of said electric heating means (MCEk) and capable of being placed according to a command in a first state totally preventing the supply of electric power to the associated electric heating means (MCEk) or a second state supplying the associated electric heating means (MCEk) with an electric power equal to 100% of a predefined maximum power, controls as a function of a maximum electric power that can be supplied and of first and second values, the first value defining electric power requirements for said electric consumer network (RC) and the second value defining electric power requirements for said electric heating means (MCEk) **characterized in that** a command imposing said first state is generated for an interrupting means (Mlk) associated with an electric heating means (MCEk) having a minimum priority among priorities assigned to the electric heating means (MCEk) to be used, when a sum of said first and second values is strictly greater than said maximum electric power and **in that** in said step a so-called pulse width modulation control is generated imposing a selected alternation between said first and second states for the interrupting means (Mlk) associated with the electric heating means (MCEk) having a minimum priority among priorities assigned to the electric heating means (MCEk) to be used and a command imposing said second state for each interrupting means (Mlk) associated with an electric heating means (MCEk) having a priority higher than this minimum priority, when said sum of the first and second values is lower than or equal to said maximum electric power.

2. Method according to claim 1, **characterised in that** in the said step each electric heating means (MCEk) to be used is determined as a function of a maximum authorised power, and then each of the said determined electric heating means (MCEk) is assigned a use classification, arbitrarily when their powers are identical or as a function of their powers when they are different, then an electric power producer (PEj) is determined which can supply said maximum electric power, then a control is determined for each of said electric heating means (MCEk) determined as a function of its use classification.

3. Method according to claim 2, **characterized in that** in said step, in the presence of at least one electrical energy storage device (SE) coupled in parallel to each electrical energy producer (PEj) and to said electrical consumption network (RC), and when no electrical energy producer (PEj) can provide said maximum electrical power, said electrical energy storage device (SE) is used to supply electrical power to said determined electrical heating means (MCEk).

4. Method according to claim 2 or 3, **characterized in that** in said step said commands of said determined electric heating means (MCEk) are generated simultaneously according to their respective use classifications.

5. Method according to claim 2 or 3, **characterized in that** in said step said commands of the determined electric heating means (MCEk) are generated one after the other starting with that of the electric heating means (MCEk) having the highest priority use classification.

6. Method according to any of claims 1 to 5, **characterized in that** in said step said commands of the electric heating means (MCEk) determined are generated also according to a voltage across said electric consumption network (RC).

7. Method according to claim 6, **characterized in that** in said step, when an electrical energy producer (PEj) can supply said maximum electrical power, either a command is generated as a function of said sum of the first and second values when this sum is strictly greater than said maximum electrical power and said voltage across said electrical consumption network (RC) is greater than a first threshold, or when this sum is less than or equal to said maximum electrical power and said voltage at the terminals of said electrical consumption network (RC) is aberrant or lower than said second threshold, or a control function of said sum of the first and second values and of said voltage across said electrical consumption network (RC) when this sum is strictly greater than said maximum electrical power and said voltage across said electrical consumption network (RC) is comprised between said first and second thresholds or a control depending on said voltage at the terminals of said electrical consumption network (RC) when this sum is less than or equal to said maximum electrical power and said voltage at the terminals of said electrical consumption network (RC) is comprised between said first and second thresholds, or still a control imposing said second state when said sum of the first and second values is less than or equal to said maximum electrical power and said voltage at the terminals of said electrical consumption network (RC) is greater than said first threshold.

8. Method according to claim 6 taken in combination with claim 3, **characterized in that** in said step, when only said electrical energy store (SE) can provide electrical power, either a control is generated as a function of a state of charge of said electrical energy store (SE) when this state of charge is between minimum and maximum states of charge and said voltage across said electrical consumption network (RC) is greater than a first threshold or aberrant, or a control as a function of said state of charge and said voltage at the terminals of said electrical consumption network (RC) when this state of charge is between minimum and maximum states of charge and said voltage at the terminals of said electrical consumption network (RC) is between a second threshold, lower than said first threshold, and said first threshold or a control depending on said voltage at the terminals of said electrical consumption network (RC) when this state of charge is higher than said maximum state of charge and said voltage at the terminals of said electrical consumption network (RC) is comprised between said second and first thresholds, or a control imposing said second state when said state of charge is higher than said maximum state of charge and said voltage at the terminals of said electrical consumption network (RC) is higher than said first threshold or aberrant or a control imposing said first state when said state of charge is higher than said maximum state of charge and said voltage across said power consumption network (RC) is lower than a third threshold, equal to said second threshold plus a hysteresis value, or when said state of charge is comprised between said minimum and maximum states of charge and said voltage across said power consumption network (RC) is lower than said third threshold, or again a control imposing said first state when said state of charge is strictly lower than said minimum state of charge

9. A control device (DC) for a system (S) comprising at least one electric energy producer (PEj) coupled in parallel to an electric consumption network (RC) and to at least two electric heating means (MCEk) having powers, the control device comprising i) interrupting means (Mlk) equal in number to the number of electric heating means (MCEk) each intended to be installed between said electrical energy producer(s) (PEj) and electrical energy store(s) (SE) and one of said electrical heating means (MCEk) and able to be placed according to a command in a first state totally preventing the supply of electrical power to the associated electrical heating means (MCEk) or a second state supplying the associated electrical heating means (MCEk) with an electrical power equal to 100% of a predefined maximum power and ii) control means (MCD) generating each of said commands as a function of a maximum electric power that can be supplied and of first and second values, the first value defining electric power requirements respectively for said electric consumption network (RC) and the second value defining electric power requirements for said electric heating means (MCEk) **characterized in that** said control means (MCD) are configured to generate a command imposing said first state for an interrupting means (Mlk) associated with an electric heating means (MCEk) having a minimum priority among priorities assigned to the electric heating means (MCEk) to be used, when a sum of said first and second values is strictly greater than said maximum electric power and **in that** said control means (MCD) are further configured to generate a so-called "first state" command for an interrupting means (Mlk) associated with an electric heating means (MCEk) having a minimum priority among priorities assigned to the electric heating means (MCEk) to be used, when a sum of said first and second values is strictly greater than said maximum electric power and **in that** said control means (MCD) are further configured to generate a so-called pulse width modulation control imposing a selected alternation between said first and second states for the interrupting means (Mlk) associated with the electric heating means (MCEk) having a minimum priority among priorities assigned to the electric heating means (MCEk) to be used, and a control imposing said second state for each interrupting means (Mlk) associated with an electric heating means (MCEk) having a priority greater than this minimum priority, when said sum of the first and second values is lower than or equal to said maximum electric power.
